# EUROPEAN PATENT APPLICATION

(11) **EP 4 604 275 A1**
(43) Date of publication of application: **20.08.2025**
(21) Application number: 24208605.6
(22) Date of filing: 24.10.2024
(51) Int. Cl.: H01M 50/102, H01M 50/103, H01M 50/148, H01M 50/15

(54) **ELECTRODE ASSEMBLY RETAINER, SECONDARY BATTERY INCLUDING THE SAME, AND METHOD OF FABRICATING SECONDARY BATTERY INCLUDING THE SAME**

(30) Priority: 19.02.2024 KR 20240023748
(71) Applicant: SAMSUNG SDI CO., LTD., Yongin-si, Gyeonggi-do 17084 (KR)
(72) Inventor: Bae, Chaeeun, 17084 Yongin-Si, Gyeonggi-do (KR); Bae, Kwangsoo, 17084 Yongin-Si, Gyeonggi-do (KR); Lee, Junhyung, 17084 Yongin-Si, Gyeonggi-do (KR); Yong, Jun-Sun, 17084 Yongin-Si, Gyeonggi-do (KR); Kim, Jihwan, 17084 Yongin-Si, Gyeonggi-do (KR); Roh, Heyoungcheoul, 17084 Yongin-Si, Gyeonggi-do (KR); Lee, Jungwoo, 17084 Yongin-Si, Gyeonggi-do (KR)
(74) Representative: Gulde & Partner

(57) **Abstract**

An electrode assembly retainer (300) includes: a first insulating plate (310) to cover a top surface of an electrode assembly (200); a second insulating plate (320) to cover a first side surface of the electrode assembly (200); a third insulating plate (330) to cover a bottom surface of the electrode assembly (200); and a fourth insulating plate (340) to cover a second side surface of the electrode assembly (200) opposite to the first side surface.

## Description

### BACKGROUND

### 1. Field

Aspects of embodiments of the present disclosure relate to an electrode assembly retainer, a secondary battery including the same, and a method of fabricating a secondary battery including the same.

### 2. Description of the Related Art

Secondary batteries are rechargeable batteries referring to batteries that may be charged and discharged a plurality of times. Such secondary batteries are mainly used in various applications such as electronics (e.g., smartphones, laptops, and tablets), electric vehicles, solar power generation, and emergency power supplies. In particular, lithium-ion batteries are used in a variety of electronics and electric vehicles due to high energy density and high charge and discharge efficiency thereof.

On the other hand, secondary cells may ignite or explode upon impact. A plastic housing surrounding the outside of the secondary cell may be used to cushion or absorb physical shock. However, in the case of large cells, as the size of the pole plate increases, the electrode assembly disposed inside a case may be more easily biased or twisted, making it vulnerable to external impacts.

The above information disclosed in this Background section is for enhancement of understanding of the background of the present disclosure, and therefore, it may contain information that does not constitute related (or prior) art.

### SUMMARY

Embodiments of present disclosure may be directed to an electrode assembly retainer, a secondary battery including the same, and a method of fabricating a secondary battery including the same. For example, embodiments of the present disclosure may be directed to an electrode assembly retainer including insulating plates that are attached to four surfaces of an electrode assembly, a secondary battery including the same, and a method of fabricating a secondary battery including the same.

These and other aspects and features of the present disclosure will be described in or will be apparent from the following description of embodiments of the present disclosure.

According to one or more embodiments of the present disclosure, an electrode assembly retainer includes: a first insulating plate configured to cover a top surface of an electrode assembly; a second insulating plate configured to cover a first side surface of the electrode assembly; a third insulating plate configured to cover a bottom surface of the electrode assembly; and a fourth insulating plate configured to cover a second side surface of the electrode assembly opposite to the first side surface.

In an embodiment, a first fastening portion may be located on a first end of the second insulating plate, and a second fastening portion may be located on a first end of the first insulating plate, and configured to be fastened to the first fastening portion.

In an embodiment, the first fastening portion may have a hook shape, the second fastening portion may have a catch projection (or a latching protrusion), and the first fastening portion may be configured to be inserted into and fastened to the catch projection of the second fastening portion. In an embodiment, the first fastening portion may include a first hook extending in a first direction, and a second hook extending in a second direction opposite to the first direction.

In an embodiment, a third fastening portion may be located on a first end of the fourth insulating plate, and a second end of the first insulating plate may include a fourth fastening portion configured to be fastened to the third fastening portion.

In an embodiment, the third fastening portion may have a hook shape, the fourth fastening portion may include a catch projection (or a latching protrusion), and the third fastening portion may be configured to be inserted into and fastened to the catch projection of the fourth fastening portion. In an embodiment, a first end of the first insulating plate may be hinge-coupled to a first end of the fourth insulating plate.

In an embodiment, the second insulating plate, the third insulating plate, and the fourth insulating plate may be bent from a single injection product. An injection product may be, for example, an injection molded product. E.g., such an injection molded product may be made of a synthetic material.

In an embodiment, the electrode assembly retainer may further include: a first bend between the second insulating plate and the third insulating plate; and a second bend between the third insulating plate and the fourth insulating plate.

In an embodiment, the first insulating plate, the second insulating plate, the third insulating plate, and the fourth insulating plate may be integral with each other and bent from a single injection product.

In an embodiment, the electrode assembly retainer may further include: a first bend between the second insulating plate and the third insulating plate; a second bend between the third insulating plate and the fourth insulating plate; and a third bend between the fourth insulating plate and the first insulating plate.

In an embodiment, the second insulating plate and the third insulating plate may be connected to each other by a hinge coupling, and the third insulating plate and the fourth insulating plate may be connected to each other by a hinge coupling.

In an embodiment, the second insulating plate and the third insulating plate may be connected to each other by a hinge coupling, the third insulating plate and the fourth insulating plate may be connected to each other by a hinge coupling, and the fourth insulating plate and the first insulating plate may be connected to each other by a hinge coupling.

In an embodiment, the electrode assembly retainer may further include an adhesive layer between the electrode assembly and each of the first insulating plate to the fourth insulating plate. In an embodiment, the first to fourth insulating plates may include an insulating injection product. In an embodiment, a secondary battery may include: an electrode assembly; the electrode assembly retainer; and a case configured to accommodate the electrode assembly and the electrode assembly retainer.

According to one or more embodiments of the present disclosure, a method of fabricating a secondary battery, includes: preparing an upper insulator to cover a top surface of an electrode assembly, and a lower insulator to cover a lower portion of the electrode assembly including a first side surface, a bottom surface, and a second side surface opposite to the first side surface of the electrode assembly; attaching the lower insulator to the lower portion of the electrode assembly; inserting the electrode assembly with the attached lower insulator into an opening of a battery case; attaching the upper insulator to the top surface of the electrode assembly; and sealing the opening of the battery case with a cap plate.

In an embodiment, a first end of the lower insulator may include a protruding hook, a first end of the upper insulator may include a catch projection (or a latching protrusion) to which the protruding hook is fixed, and the first end of the lower insulator and the first end of the upper insulator may be fastened to each other with the protruding hook on the first end of the lower insulator caught by the catch projection of the upper insulator.

In an embodiment, the attaching of the lower insulator to the lower portion of the electrode assembly may include: bending the lower insulator at a first angle of contact between the bottom surface and the first side surface, and a second angle of contact between the bottom surface and the second side surface; and attaching the bent lower insulator to the first side surface, the bottom surface, and the second side surface.

In an embodiment, the lower insulator may include a first insulator, a second insulator, and a third insulator. The preparing of the lower insulator to cover the lower portion of the electrode assembly may include hinge-coupling the first insulator and the second insulator to each other, hinge-coupling the second insulator and the third insulator to each other, and hinge-coupling the third insulator and the upper insulator to each other. The attaching of the lower insulator to the lower portion of the electrode assembly may include: attaching the first insulator to the first side surface; attaching the second insulator to the bottom surface; and attaching the third insulator to the second side surface.

According to some embodiments of the present disclosure, the electrode assembly may be structurally supported so as not to be biased or twisted by attaching the electrode assembly retainer to the outside of the electrode assembly.

According to some embodiments of the present disclosure, the electrode assembly retainer may be more simply fastened using the hook-shaped fastening portions.

According to some embodiments of the present disclosure, the electrode assembly retainer may include the insulating plates connected by the hinge connectors so as to be more simply attached to the electrode assembly.

According to some embodiments of the present disclosure, after the process of inserting the electrode assembly into the case and electrically connecting the electrode terminals disposed at the top of the electrode assembly to the terminal plates of the cap plate, the upper insulating plate may be more simply and accurately attached to the top surface of the electrode assembly, thereby improving the ease of processing.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing an example of a secondary battery according to one or more embodiments of the present disclosure;
FIG. 2 illustrates an exploded perspective view showing an example in which portions of the secondary battery are disassembled according to one or more embodiments;
FIG. 3 illustrates a perspective view showing an electrode assembly retainer according to one or more embodiments;
FIG. 4 illustrates an example of fastening portions of insulating plates according to one or more embodiments;
FIG. 5 illustrates a fastening process of the insulating plates including the fastening portions according to one or more embodiments;
FIG. 6 illustrates an example of the electrode assembly retainer including an integrated lower insulator according to one or more embodiments;
FIG. 7 illustrates an example of an integral electrode assembly retainer according to one or more embodiments;
FIG. 8 illustrates an example of a hinge connector provided between the insulating plates;
FIG. 9 illustrates an example of an integral electrode assembly retainer including hinge connectors according to one or more embodiments; and
FIG. 10 illustrates a flowchart showing an example of a method of fabricating a secondary battery including an electrode assembly retainer according to one or more embodiments.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components". Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

In the present disclosure, a "first end (or one end)" of a member may refer to one end of the member extending longitudinally and a region including the one end, wherein the "first end" of the member may refer to a proximal end of the member and a region of the member including the proximal end. Further, a "second end (or the other end)" of the member may refer to the other end of the member opposite the one end referred to as the "first end" and a region including the other end, wherein the "second end" of the member may refer to a distal end of the member and a region of the member including the distal end.

In the present disclosure, a "first end" of a member and/or a "second end" of a member are used for ease of description to distinguish each of the two ends of a longitudinally extending member from each other, and it is understood that the "first end" of the member and/or the "second end" of the member are not intended to refer exclusively to particular ends of the member.

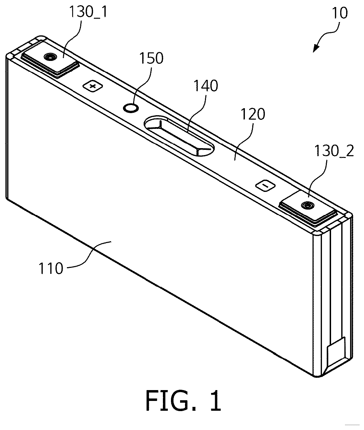

FIG. 1 illustrates a perspective view showing an example of a secondary battery 10 according to one or more embodiments of the present disclosure. Referring to FIG. 1, the secondary battery 10 may include one or more electrode assemblies that are wound or stacked with a separator provided between a positive electrode and a negative electrode, an electrode assembly retainer attached onto the electrode assemblies to support the electrode assemblies, a case 110 for accommodating therein the electrode assemblies to which the electrode assembly retainer is attached, and a cap plate 120 connected to (e.g., coupled to or attached to) an open first end of the case 110.

Each of the positive electrode and the negative electrode may include a current collector made of a thin metal foil having a coated portion on which an active material is coated and an uncoated portion on which an active material is not coated.

The positive electrode and the negative electrode are wound after providing the separator, which is an insulator, therebetween. However, the present disclosure is not limited thereto, and the electrode assembly may have a structure in which a positive electrode and a negative electrode, each made of a plurality of sheets, are alternately stacked with a separator provided therebetween.

The electrode assembly retainer may include an insulator attached onto the electrode assemblies. The electrode assembly retainer may be attached to at least four surfaces of the electrode assemblies to support the electrode assemblies.

The case 110 may form the overall outer appearance of the secondary battery 10 and may be made of a conductive metal, such as aluminum, aluminum alloy, or nickel-plated steel. In addition, the case 110 may provide a space in which the electrode assembly is accommodated.

The cap plate 120 may be connected to (e.g., coupled to or attached to) the open first end to seal the case 110. The case 110 and the cap plate 120 may be made of a conductive material. In an embodiment, the top end of the case 110 may be open, and the cap plate 120 may seal the open top end of the case 110.

A positive electrode terminal 130_1 electrically connected to the positive electrode and a negative electrode terminal 130_2 electrically connected to the negative electrode may be connected to (e.g., coupled to or attached to) the cap plate 120. For example, the positive and negative electrode terminals 130_1 and 130_2 may be provided to protrude outward from the cap plate 120.

In an embodiment, a vent 140 may be provided in one side of the secondary battery (e.g., in the top side of the secondary battery, such as in the cap plate 120 as shown in FIG. 1). The vent 140 may be opened in a case where an internal pressure having a critical pressure (e.g., a predetermined critical pressure) or higher is detected.

In an embodiment, the cap plate 120 may include an electrolyte inlet 150. For example, the electrolyte inlet 150 may be a through-hole formed in the cap plate 120, and may be formed to allow electrolyte to be injected into the case 110 after the cap plate 120 is connected to (e.g., coupled to or attached to) the opening of the case 110 to tightly (or hermetically) close the same. The electrolyte inlet 150 may be tightly closed after the electrolyte is injected.

The secondary battery may be a large secondary battery cell.

The secondary battery may be a lithium (Li) secondary battery, a sodium (Na) secondary battery, or the like. However, the present disclosure is not limited thereto, and the secondary battery may include any suitable kind of battery capable of being charged and discharged to repeatedly provide electricity. In an embodiment, in a case where the secondary battery is a Li-ion battery, the secondary battery may be used in an electric vehicle (EV) due to having an excellent lifetime and high rate characteristics. For example, Li-ion batteries may be used in a hybrid vehicle such as a plug-in hybrid electric vehicle (PHEV). In addition, Li-ion batteries may be used in a field where a large amount of electric power storage is desired. For example, Li-ion batteries may be used in electric bicycles, electric tools, and the like.

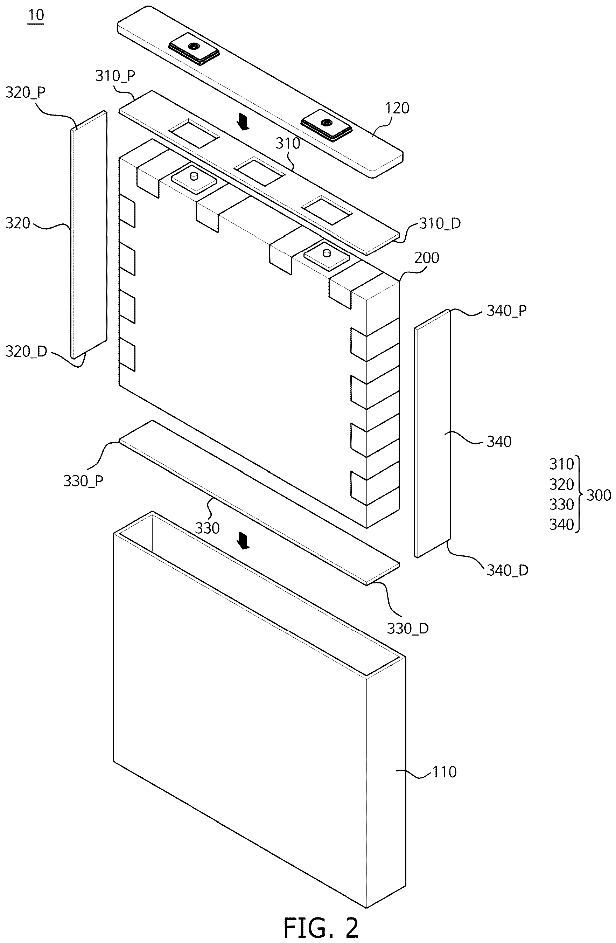

FIG. 2 illustrates an exploded perspective view showing an example in which portions of the secondary battery are disassembled according to one or more embodiments.

Referring to FIG. 2, the secondary battery may be fabricated by a process of inserting an electrode assembly 200 into a case 110 by attaching an electrode assembly retainer 300 onto the electrode assembly 200, sealing an opening of the case 110 with a cap plate 120, and injecting electrolyte into the case 110.

In an embodiment, the electrode assembly retainer 300 may include a plurality of insulating plates 310, 320, 330, and 340, which may be attached to at least four surfaces of the electrode assembly 200. For example, the electrode assembly retainer 300 may include a first insulating plate 310 to cover the top surface of the electrode assembly 200, a second insulating plate 320 to cover a first side surface of the electrode assembly 200, a third insulating plate 330 to cover the bottom surface of the electrode assembly 200, and a fourth insulating plate 340 to cover a second side surface of the electrode assembly 200.

The electrode assembly 200 may include a wound stack, an insulating tape wrapping the wound stack, a conductive structure electrically connected to a tab of the wound stack, and the like.

The electrode assembly 200 may be formed by winding or stacking a stack of a first electrode plate (not shown), a separator (not shown), and a second electrode plate (not shown), which are formed as thin plates or films. When the electrode assembly is a wound stack, a winding axis may be parallel to the longitudinal direction (e.g., the y direction) of the case 110. In other embodiments, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into opposite sides of a separator, which is then bent into a Z-stack. In addition, one or more electrode assemblies may be stacked such that long sides of the electrode assemblies are adjacent to each other and accommodated in the case 110, and the number of electrode assemblies in the case 110 is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may be connected to one of the positive and negative electrode terminals 130_1 and 130_2 (see FIG. 1) through a separate plate electrically connected to the first electrode tab.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may be connected to the other of the positive and negative electrode terminals through a separate plate electrically connected to the second electrode tab.

In an embodiment, the insulating plates 310, 320, 330, and 340 may be attached onto the electrode assembly 200 while being separated from each other. Hence, insulating plates 310, 320, 330 and 340 may be separately attached onto the electrode assembly 340, for example, one after another. For example, an adhesive, e.g., an adhesive layer, may be provided between the electrode assembly 200 and each of the first to fourth insulating plates 310, 320, 330, and 340. In other words, the adhesive layer may be provided on the electrode assembly 200, and each of the insulating plates 310, 320, 330, and 340 may be attached onto the adhesive layer. In another example, the insulating plates 310, 320, 330, and 340 may be disposed on the electrode assembly 200, and a fixing tape may be wound around the insulating plates 310, 320, 330, and 340 to fix the electrode assembly 200 and the insulating plates 310, 320, 330, and 340 to each other. The method of attaching the insulating plates 310, 320, 330, and 340 onto the electrode assembly 200 is not limited to the examples described above, and may be variously modified as needed or desired.

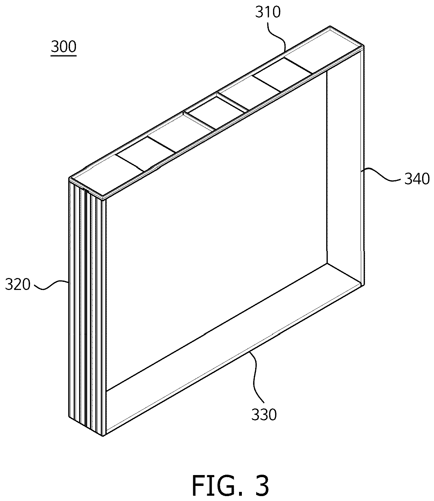

In another example, at least two insulating plates from among the insulating plates 310, 320, 330, and 340 may be connected to each other. For example, a first end 310_P of the first insulating plate 310, a second end 310_D of the first insulating plate 310, a second end 320_D of the second insulating plate 320, and a second end 340_D of the fourth insulating plate 340 may be connected to a first end 320_P of the second insulating plate 320, a first end 340_P of the fourth insulating plate 340, a first end 330_P of the third insulating plate 330, and a second end 330_D of the third insulating plate 330, respectively. The method of connecting the insulating plates 310, 320, 330, and 340 will be described in more detail below with reference to FIGS. 3 to 9.

Accordingly, the electrode assembly retainer 300 may structurally support the electrode assembly 200 so as not to be biased or twisted by an external impact to the secondary battery.

FIG. 3 illustrates a perspective view showing the electrode assembly retainer 300 according to one or more embodiments.

In an embodiment, the electrode assembly retainer 300 may include the first insulating plate 310 disposed on the top surface of the electrode assembly, the second insulating plate 320 and the fourth insulating plate 340 disposed on opposite side surfaces of the electrode assembly, respectively, and the third insulating plate 330 disposed on the bottom surface of the electrode assembly, to structurally support the electrode assembly 200 (e.g., see FIG. 2).

The first to fourth insulating plates 310, 320, 330, and 340 may be an insulating injection product. For example, the first to fourth insulating plates 310, 320, 330, and 340 may include a porous copolymer of polyethylene, polypropylene, polyethylene, polypropylene, or the like. However, the composition of the first to fourth insulating plates 310, 320, 330, and 340 according to the present disclosure is not limited thereto.

At least one of the first to fourth insulating plates 310, 320, 330, and 340 may have a through-hole (or multiple through-holes) to facilitate a connection (e.g., a coupling or an attaching) with the electrode assembly. For example, an electrode terminal may be provided on the top surface of the electrode assembly. The first insulating plate 310 may have a through-hole allowing the electrode terminal to pass therethrough. In addition, the through-hole of the first insulating plate 310 may be provided at a position corresponding to the cap plate 120.

The lengths of the first to fourth insulating plates 310, 320, 330, and 340 may be the same or substantially the same as or greater than the lengths of the top, the opposite sides, and the bottom surfaces of the electrode assembly, respectively. In addition, the widths of the first to fourth insulating plates 310, 320, 330, and 340 may be the same or substantially the same as or greater than the widths of the top, the opposite sides, and the bottom surfaces of the electrode assembly, respectively.

In addition, the thickness of each of the second insulating plate 320 and the fourth insulating plate 340 disposed on the opposite side surfaces of the electrode assembly may be smaller than the thickness of the third insulating plate 330 attached to the bottom surface of the electrode assembly. For example, the thickness of each of the second insulating plate 320 and the fourth insulating plate 340 may be 0.3 mm, and the thickness of the third insulating plate 330 may be 1 mm. In addition, the thickness of the first insulating plate 310 disposed on the top surface of the electrode assembly may be smaller than the height of the electrode terminal protruding from the top surface of the electrode assembly.

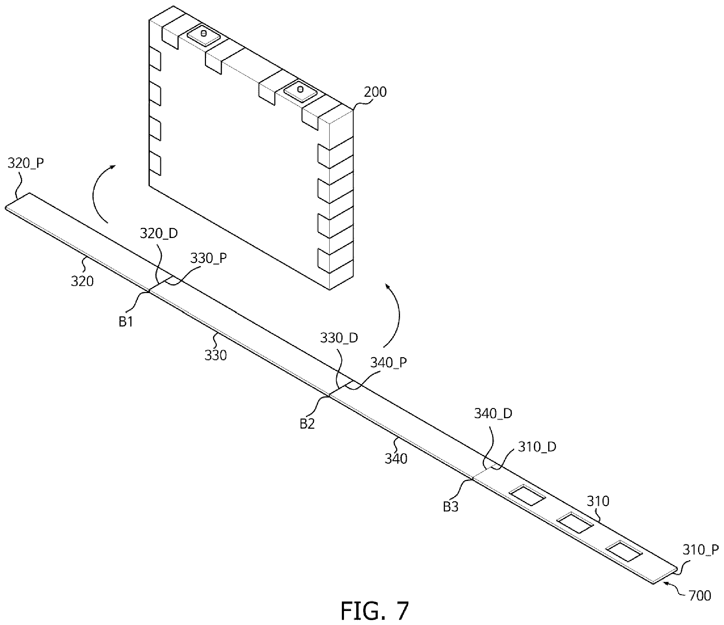

In an embodiment, at least two insulating plates from among the first to fourth insulating plates 310, 320, 330, and 340 may be integrated with each other. For example, a single insulating injection product may be bent to form two insulating plates. An example of the integral connection method will be described in more detail below with reference to FIG. 7.

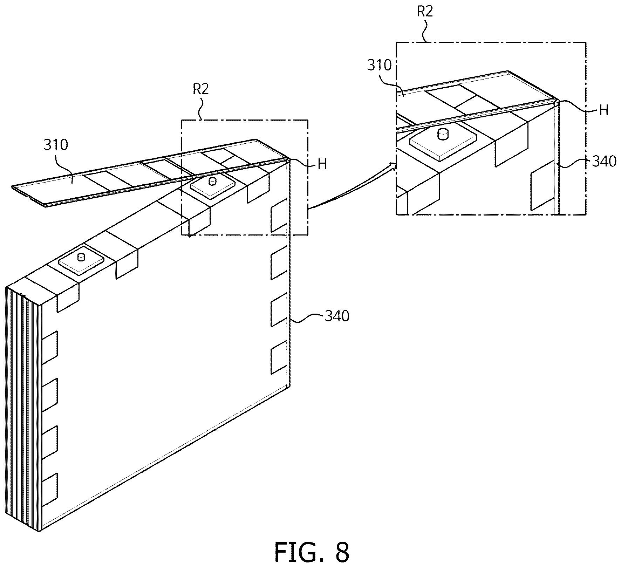

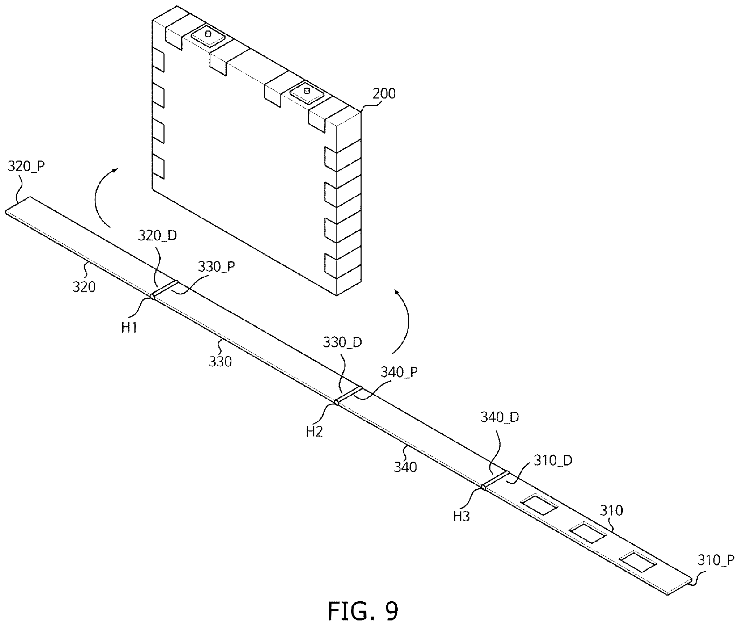

In an embodiment, at least two insulating plates from among the insulating plates 310, 320, 330, and 340 may be connected to each other by a hinge coupling. In this case, the two insulating plates that are connected to each other by the hinge coupling may be rotatable, e.g., rotatable with respect to each other. An example of the hinge connection will be described in more detail below with reference to FIGS. 8 and 9.

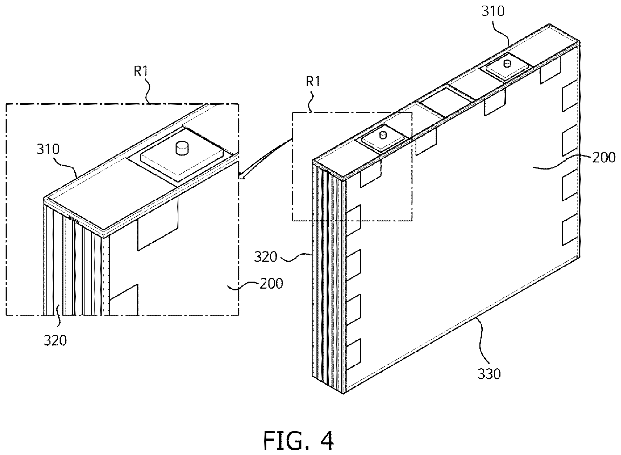

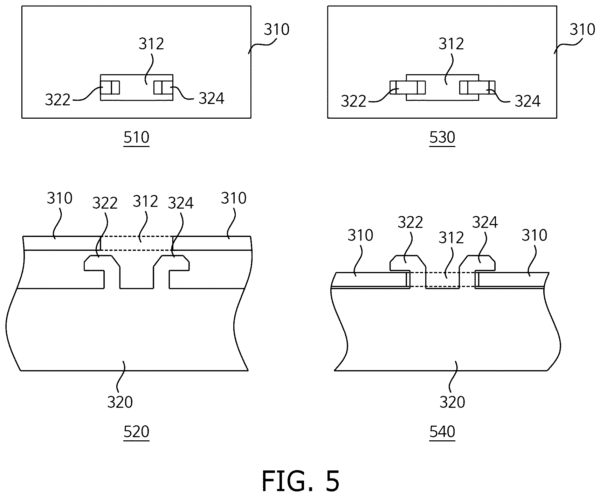

In an embodiment, each of at least two insulating plates from among the insulating plates 310, 320, 330, and 340 may include a fastening portion, and may be configured such that the insulating plates that are separated from each other may be fastened to each other by the fastening portion. For example, one of the two insulating plates may include a hook-shaped fastening portion, and the other of the two insulating plates may include a fastening portion having a catch projection (or a latching protrusion). The two insulating plates may be fastened to each other with the hook-shaped fastening portion being caught by the catch projection. An example in which the two insulating plates are fastened to each other using the fastening portions will be described in more detail below with reference to FIGS. 4 and 5.

FIG. 4 illustrates an example of the fastening portions of the insulating plates 310 and 320 according to one or more embodiments. FIG. 5 illustrates a fastening process of the insulating plates 310 and 320 including the fastening portions according to one or more embodiments. In an embodiment, a first end of the first insulating plate 310 and a first end of the second insulating plate 320 may be fastened to each other using the fastening portions.

Referring to region R1 in FIG. 4, a first fastening portion may be provided on the first end of the second insulating plate 320, and a second fastening portion may be provided on the first end of the first insulating plate 310 to be fastened to the first fastening portion. In an embodiment, the first fastening portion may have a shape of a hook, and the second fastening portion may have a shape of a catch projection (or a latching protrusion). In this case, the first fastening portion and the second fastening portion may be fastened to each other with the hook of the first fastening portion being fitted to the catch projection of the second fastening portion.

The catch projection of the second fastening portion may have a variety of suitable shapes. In an example, as illustrated in FIGS. 4 and 5, the second fastening portion may include a through-hole 312, and the first fastening portion may have a configuration fitted into and extending through the through-hole 312. In this case, the inner surface of the through-hole 312 and the top surface of the first insulating plate 310 may serve as a catch projection. In another example, the catch projection of the second fastening portion may protrude from the inner surface of a recess or a through-hole. In this case, after the first fastening portion is pushed into the recess or the through-hole, the hook of the first fastening portion may be caught by the catch projection to be fastened to the second fastening portion. In another example, the outer surface of the first end of the first insulating plate 310 may serve as a catch projection. In this case, the first fastening portion may be fastened to the second fastening portion as the hook of the first fastening portion is caught by the top surface and the catch projection defined by the outer surface of the first insulating plate 310.

FIG. 5 illustrates an example top view 510 of the first insulating plate 310 and an example front view 520 of the second insulating plate 320 prior to fastening between the first insulating plate 310 and the second insulating plate 320. In an embodiment, the first fastening portion may include a first hook 322 extending in a first direction, and a second hook 324 extending in a second direction (e.g., an opposite direction of the first direction, or at an angle of 90° with respect to the first direction).

In addition, FIG. 5 illustrates an example top view 530 of the first insulating plate 310 and an example front view 540 of the second insulating plate 320 after fastening between the first insulating plate 310 and the second insulating plate 320. The first hook 322 and the second hook 324 may extend through the through-hole 312 to be caught by and fastened to the inner surface of the through-hole 312 and the top surface of the first insulating plate 310.

In addition, a second end of the first insulating plate 310 and a first end of the fourth insulating plate 340 (e.g., see FIG. 3) may be fastened to each other using fastening portions. For example, a third fastening portion may be provided on the first end of the fourth insulating plate, and the second end of the first insulating plate 310 may include a fourth fastening portion configured to be fastened to the third fastening portion. In this case, the third fastening portion may have the shape of a hook. The fourth fastening portion may have the shape of a catch projection. The third fastening portion may be fitted into and fastened to the catch projection of the fourth fastening portion. As such, the first insulating plate 310 positioned on the top surface of the electrode assembly 200 (e.g., see FIG. 2) may be simply fastened to the second insulating plate 320 and the fourth insulating plate 340 positioned on opposite side surfaces of the electrode assembly using the fastening portions provided on the first end and the second end thereof.

Accordingly, after the process of inserting the electrode assembly 200 into the case 100 and electrically connecting the electrode terminals disposed at the top of the electrode assembly to the terminal plates of the cap plate 120 (e.g., see FIG. 1) is performed, the upper insulating plate may be simply and accurately attached to the top surface of the electrode assembly, thereby improving an ease of processing.

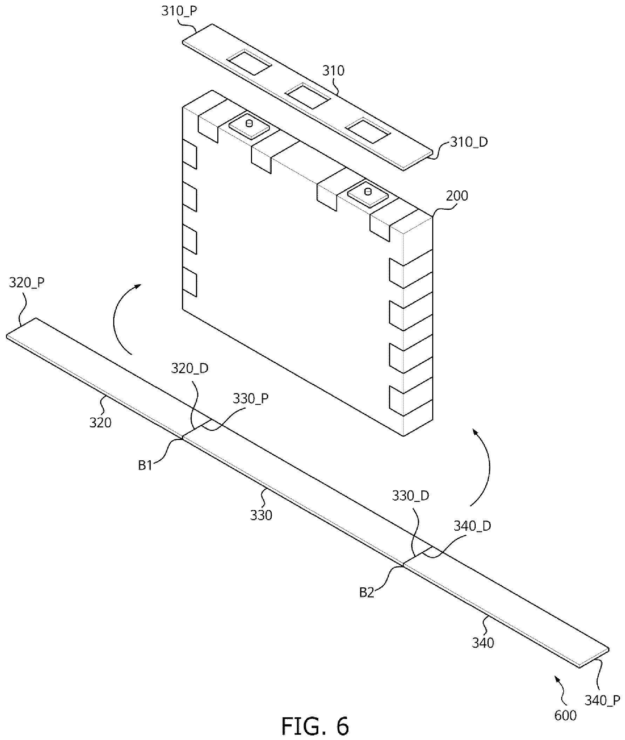

FIG. 6 illustrates an example of the electrode assembly retainer including an integrated lower insulator according to one or more embodiments.

In an embodiment, the electrode assembly retainer may include an upper insulator and a lower retainer. The upper insulator may cover the upper surface of the electrode assembly 200. The lower insulator may cover the bottom portion of the electrode assembly including a first side surface, the bottom surface, and a second side surface.

In an embodiment, the lower insulator may be formed integrally by bending a single injection product 600. Referring to FIG. 6, the second insulating plate 320, the third insulating plate 330, and the fourth insulating plate 340 may be formed together by bending the single injection product 600. Each of the first end 320_P of the second insulating plate and the first end 340_P of the fourth insulating plate may form ends of the single injection product 600.

The lower insulator may include a first bend B1 and a second bend B2. The first bend B1 may be provided between the second insulating plate 320 and the third insulating plate 330. In more detail, the first bend B1 may refer to a portion connecting the second end 320_D of the second insulating plate and the first end 330_P of the third insulating plate to each other, and may be formed by bending the single injection product 600 at a first angle of contact between the bottom surface and the first side surface of the electrode assembly. A section in which there is a bent section of material can be described as a "bend". The bend angle can be 90°, for example. Hence, the first angle mentioned above may be 90°.

The second bend B2 may be provided between the third insulating plate 330 and the fourth insulating plate 340. In more detail, the second bend B2 may refer to a portion connecting the second end 330_D of the third insulating plate and the second end 340_D of the fourth insulating plate to each other, and may be formed by bending the single injection product 600 at a second angle of contact between the bottom surface and the second side surface of the electrode assembly.

The lower insulator may be attached to the first side surface, the bottom surface, and the second side surface of the electrode assembly 200. For example, the first end 320_P of the second insulating plate (e.g., a first end of the single injection product 600) may be positioned at the top of the first side surface of the electrode assembly 200. The first end 340_P of the fourth insulating plate (e.g., a second end of the single injection product 600) may be positioned at the top of the second side surface of the electrode assembly. The first bend B1 may be positioned at the corner forming the first angle, and the second end 320_D of the second insulating plate and the first end 330_P of the third insulating plate may be connected to each other. The second bend B2 may be positioned at the corner forming the second angle, and the second end 330_D of the third insulating plate and the second end 340_D of the fourth insulating plate may be connected to each other.

The upper insulator (e.g., the first insulating plate 310) may be positioned on the top surface of the electrode assembly. In an embodiment, the first end 310_P of the first insulating plate may be in contact with the first end 320_P of the second insulating plate, and the second end 310_D of the first insulating plate may be in contact with the first end 340_P of the fourth insulating plate. The first end 310_P of the first insulating plate and the first end 320_P of the second insulating plate and/or the second end 310_D of the first insulating plate and the first end 340_P of the fourth insulating plate may be fastened to each other as described above with reference to FIGS. 4 and 5.

FIG. 7 illustrates an example of an integral electrode assembly retainer according to one or more embodiments.

In an embodiment, the electrode assembly retainer may be integrally formed by bending a single injection product 700. The integral electrode assembly retainer may cover the first side surface, the bottom surface, the second side surface, and the top surface of the electrode assembly 200. In an embodiment, the integral electrode assembly retainer may be integrally formed by bending the single injection product 700. Referring to FIG. 7, the first insulating plate 310, the second insulating plate 320, the third insulating plate 330, and the fourth insulating plate 340 may be formed by bending the single injection product 700. The first end 310_P of the first insulating plate and the first end 320_P of the second insulating plate may form ends of the single injection product 700, respectively.

The integral electrode assembly retainer may include a first bend B1, a second bend B2, and a third bend B3. The first bend B1 may be provided between the second insulating plate 320 and the third insulating plate 330. In more detail, the first bend B1 may refer to a portion connecting the second end 320_D of the second insulating plate and the first end 330_P of the third insulating plate to each other, and may be formed by bending the single injection product 700 at a first angle of contact between the bottom surface and the first side surface of the electrode assembly.

The second bend B2 may be provided between the third insulating plate 330 and the fourth insulating plate 340. In more detail, the second bend B2 may refer to a portion connecting the second end 330_D of the third insulating plate and the second end 340_D of the fourth insulating plate to each other, and may be formed by bending the single injection product 700 at a second angle of contact between the bottom surface and the second side surface of the electrode assembly.

The third bend B3 may be provided between the fourth insulating plate 340 and the first insulating plate 310. In more detail, the third bend B3 may refer to a portion connecting the first end 340_P of the fourth insulating plate and the second end 310_D of the first insulating plate to each other, and may be formed by bending the single injection product 700 at a third angle of contact between the second side surface and the top surface of the electrode assembly.

The integral electrode assembly retainer may be attached to the first side surface, the bottom surface, the second side surface, and the top surface of the electrode assembly 200. For example, the first end 320_P of the second insulating plate (e.g., a first end of the single injection product 700) may be positioned at the top of the first side surface of the electrode assembly 200. The first end 310_P of the first insulating plate (e.g., a second end of the single injection product 700) may be positioned on a first end of the top surface of the electrode assembly. The first end 310_P of the first insulating plate may be in contact with the first end 320_P of the second insulating plate, and may be fastened to the first end 320_P in a manner as described above with reference to FIGS. 4 and 5.

The first bend B1 may be positioned at the corner defining the first angle, and the second end 320_D of the second insulating plate and the first end 330_P of the third insulating plate may be connected to each other. The second bend B2 may be positioned at the corner defining the second angle, and the second end 330_D of the third insulating plate and the second end 340_D of the fourth insulating plate may be connected to each other. The third bend B3 may be positioned at the corner defining the third angle, and the first end 340_P of the fourth insulating plate and the second end 310_D of the first insulating plate may be connected to each other. FIG. 8 illustrates an example of a hinge connector H provided between the insulating plates 310 and 340.

In an embodiment, at least a first insulating plate and an adjacent second insulating plate from among the insulating plates of the electrode assembly retainer may be connected to each other by a hinge coupling. For example, referring to the region R2 of FIG. 8, the first end of the first insulating plate 310 may be connected to the first end of the fourth insulating plate 340 by the hinge coupling.

In an embodiment, a cylindrical hinge pin may be integrally provided on a first end of a first insulating plate from among the insulating plates, and an adjacent second insulating plate from among the insulating plates may have a hinge hole configured to receive the hinge pin. For example, as the hinge pin provided on the first insulating plate 310 is received in the hinge hole of the fourth insulating plate 340, the first insulating plate 310 and the fourth insulating plate 340 may be rotatably connected to each other.

The hinge coupling between the insulating plates is not limited to the example described above, and the insulating plates may be rotatably connected to each other by a hinge coupling by various suitable manners. For example, hinge holes for receiving a hinge pin may be provided in the first insulating plate and the adjacent second insulating plate from among the insulating plates, respectively, and the hinge pin may be received in and connected to (e.g., coupled to or attached to) both the hinge holes the first insulating plate and the adjacent second insulating plate, so that the first insulating plate and the adjacent second insulating plate from among the insulating plates may be connected to each other by the hinge coupling.

In addition, at least a first insulating plate and an adjacent second insulating plate from among the insulating plates may be fastened to each other by a hook coupling, and at least the first insulating plate and an adjacent third insulating plate from among the insulating plates may be connected to each other by a hinge coupling. For example, the first end of the first insulating plate 310 and the first end of the second insulating plate 320 (e.g., see FIG. 4) may be fastened to each other using the fastening portions in a manner as described above with reference to FIG. 4, and the second end of the first insulating plate 310 and the first end of the fourth insulating plate 340 may be connected to each other by the hinge coupling.

The first insulating plate 310 may be fastened to the second insulating plate 320 while rotating with respect to the second end of the first insulating plate 310. Accordingly, even after the electrode assembly is inserted into the case 100, the first insulating plate 310 may be accurately and easily attached to the top surface of the electrode assembly on which the electrode terminal is disposed, thereby improving the ease of processing.

FIG. 9 illustrates an example of an integral electrode assembly retainer including hinge connectors H1, H2, and H3 according to one or more embodiments.

In an embodiment, the electrode assembly retainer may be fabricated by hinge-connecting the insulating plates 310, 320, 330, and 340 to one another. The electrode assembly retainer may cover the first side surface, the bottom surface, the second side surface, and the top surface of the electrode assembly 200.

In an embodiment, the electrode assembly retainer may include a plurality of insulating injection products, and may include the first hinge connector H1, the second hinge connector H2, and the third hinge connector H3. The first hinge connector H1 may refer to a portion connecting the second end 320_D of the second insulating plate and the first end 330_P of the third insulating plate to each other, and may correspond to a first angle of contact between the bottom surface and the first side surface of the electrode assembly. The second hinge connector H2 may refer to a portion connecting the second end 330_D of the third insulating plate and the second end 340_D of the fourth insulating plate to each other, and may correspond to a second angle of contact between the bottom surface and the second side surface of the electrode assembly. The third hinge connector H3 may refer to a portion connecting the first end 340_P of the fourth insulating plate and the secondend 310_D of the first insulating plate to each other, and may correspond to a third angle of contact between the second side surface and the top surface of the electrode assembly. The first through third angles of contact may each be 90°.

The electrode assembly retainer may be attached to the first side surface, the bottom surface, the second side surface, and the top surface of the electrode assembly 200. For example, the first end 320_P of the second insulating plate may be positioned at the top of the first side surface, and the first end 310_P of the first insulating plate may be positioned on the first end of the top surface of the electrode assembly. The first end 310_P of the first insulating plate may be in contact with the first end 320_P of the second insulating plate, and may be fastened thereto in a manner described above with reference to FIGS. 4 and 5.

The first hinge connector H1 may be positioned on the corner defining the first angle, and the second end 320_D of the second insulating plate and the first end 330_P of the third insulating plate may be connected to each other by a hinge coupling. The second hinge connector H2 may be positioned on the corner defining the second angle, and the second end 330_D of the third insulating plate and the second end 340_D of the fourth insulating plate may be connected to each other by a hinge coupling. The third hinge connector H3 may be positioned on the corner defining the third angle, and the first end 340_P of the fourth insulating plate and the second end 310_D of the first insulating plate may be connected to each other by a hinge coupling.

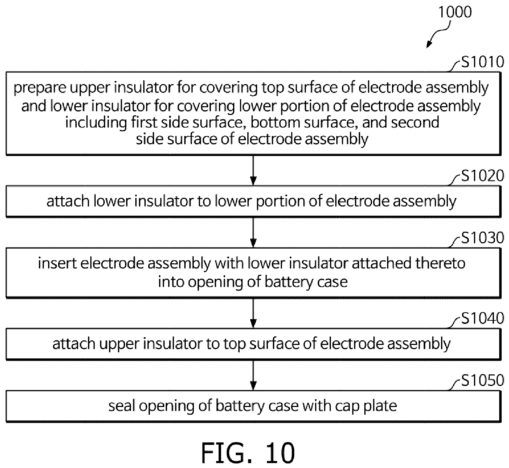

FIG. 10 illustrates a flowchart showing an example of a method 1000 of fabricating a secondary battery including an electrode assembly retainer according to one or more embodiments.

In an embodiment, the method 1000 of fabricating a secondary battery may be performed by an apparatus for fabricating a secondary battery (hereinafter, referred to as the "fabrication apparatus").

The fabrication apparatus (e.g., an injection molding part of the fabrication apparatus) may prepare an upper insulator for covering the top surface of the electrode assembly, and a lower insulator for covering the lower portion of the electrode assembly including the first side surface, the bottom surface, and the second side surface of the electrode assembly (S1010). The first side surface and the second side surface may be positioned to face each other.

The fabrication apparatus (e.g., a retainer attaching portion of the fabrication apparatus) may attach the lower insulator to the lower portion of the electrode assembly (S1020). The fabrication apparatus (e.g., an assembling portion of the fabrication apparatus) may insert the electrode assembly with the lower insulator attached thereto into an opening of the battery case (S1030). Thereafter, the fabrication apparatus (e.g., the retainer attaching portion of the fabrication apparatus) may attach the upper insulator to the top surface of the electrode assembly (S1040). The fabrication apparatus (e.g., the assembling portion of the fabrication apparatus) may seal the opening of the battery case with a cap plate (S1050).

In an embodiment, the lower insulator and/or the upper insulator may be configured to fasten separated insulating plates to each other using fastening portions. For example, the first end of the lower insulator may have the protruding hook, and the first end of the upper insulator may include the catch projection to which the hook is fixed, so that the first end of the lower insulator and the first end of the upper insulator may be fastened to each other with the hook on the first end of the lower insulator being caught by the catch projection of the upper insulator. In this case, the fabrication apparatus (e.g., the retainer attaching portion of the fabrication apparatus) may bend the lower insulator at the first angle of contact between the bottom surface and the first side surface of the electrode assembly, and the second angle of contact between the bottom surface and the second side surface of the electrode assembly. Thereafter, the bent lower insulator may be attached to the first side surface, the bottom surface, and the second side surface of the electrode assembly.

In an embodiment, the insulating plates of the electrode assembly retainer may be rotatably connected to each other by the hinge coupling. For example, the lower insulator may include a first insulator, a second insulator, and a third insulator. In this case, the fabrication apparatus (e.g., the retainer attaching portion of the fabrication apparatus) may hinge-couple the first insulator and the second insulator to each other, the second insulator and the third insulator to each other, and the third insulator and the upper insulator to each other. Thereafter, the fabrication apparatus (e.g., the assembling portion of the fabrication apparatus) may attach the first insulator to the first side surface, the second insulator to the bottom surface, and then the third insulator to the second side surface.

Although the present disclosure has been described above with respect to embodiments thereof, the present disclosure is not limited thereto. Various modifications and variations can be made thereto by those skilled in the art within the spirit of the present disclosure and the scope of the appended claims.

### Description of Reference Symbols

10: secondary battery
110: case
120: cap plate
130: terminal
140: vent
150: electrolyte inlet

## Claims

1. An electrode assembly retainer (300) comprising:
a first insulating plate (310) configured to cover a top surface of an electrode assembly (200);
a second insulating plate (320) configured to cover a first side surface of the electrode assembly (200);
a third insulating plate (330) configured to cover a bottom surface of the electrode assembly (200); and
a fourth insulating plate (340) configured to cover a second side surface of the electrode assembly (200) opposite to the first side surface.

2. The electrode assembly retainer (300) as claimed in claim 1, wherein a first fastening portion is located on a first end (320_P) of the second insulating plate (320, and
a second fastening portion is located on a first end (310_P) of the first insulating plate (310), and configured to be fastened to the first fastening portion.

3. The electrode assembly retainer (300) as claimed in claim 2, wherein the first fastening portion has a hook shape,
wherein the second fastening portion has a catch projection, and
wherein the first fastening portion is configured to be inserted into and fastened to the catch projection of the second fastening portion.

4. The electrode assembly retainer (300) as claimed in claim 2 or claim 3, wherein the first fastening portion comprises a first hook (322) extending in a first direction, and a second hook (324) extending in a second direction opposite to the first direction.

5. The electrode assembly retainer (300) as claimed in one of claims 2 to 4, wherein a third fastening portion is located on a first end (340_P) of the fourth insulating plate (340), and
a second end (310_D) of the first insulating plate (310) comprises a fourth fastening portion configured to be fastened to the third fastening portion.

6. The electrode assembly retainer (300) as claimed in claim 5, wherein the third fastening portion has a hook shape,
wherein the fourth fastening portion comprises a catch projection, and
wherein the third fastening portion is configured to be inserted into and fastened to the catch projection of the fourth fastening portion.

7. The electrode assembly retainer (300) as claimed in claim 1, wherein a first end (310_P) of the first insulating plate (310) is hinge-coupled to a first end (340_P) of the fourth insulating plate (340).

8. The electrode assembly retainer (300) as claimed in one of claims 1 to 7, wherein the second insulating plate (320), the third insulating plate (330), and the fourth insulating plate (340) are bent from a single injection product.

9. The electrode assembly retainer (300) as claimed in one of claims 1 to 4 or one of claims 7 to 8, further comprising:
a first bend between the second insulating plate (320) and the third insulating plate (330); and
a second bend between the third insulating plate (330) and the fourth insulating plate (340).

10. The electrode assembly retainer (300) as claimed in claim 1, wherein the first insulating plate (310), the second insulating plate (320), the third insulating plate (330), and the fourth insulating plate (340) are integral with each other and bent from a single injection product.

11. The electrode assembly retainer (300) as claimed in claim 10, further comprising:
a first bend between the second insulating plate (320) and the third insulating plate (330);
a second bend between the third insulating plate (330) and the fourth insulating plate (340); and
a third bend between the fourth insulating plate (340) and the first insulating plate (310).

12. The electrode assembly retainer (300) as claimed in one of claims 1 to 7, wherein the second insulating plate (320) and the third insulating plate (330) are connected to each other by a hinge coupling, and
the third insulating plate (330) and the fourth insulating plate (340) are connected to each other by a hinge coupling.

13. The electrode assembly retainer (300) as claimed in one of claims 1 to 4, wherein the second insulating plate (320) and the third insulating plate (330) are connected to each other by a hinge coupling,
the third insulating plate (330) and the fourth insulating plate (340) are connected to each other by a hinge coupling, and
the fourth insulating plate (340) and the first insulating plate (310) are connected to each other by a hinge coupling.

14. The electrode assembly retainer (300) as claimed in one of claims 1 to 13, wherein the first to fourth insulating plates (310, 320, 330, 340) comprise an insulating injection product.

15. A method (1000) of fabricating a secondary battery, the method comprising:
preparing an upper insulator to cover a top surface of an electrode assembly, and a lower insulator to cover a lower portion of the electrode assembly including a first side surface, a bottom surface, and a second side surface opposite to the first side surface of the electrode assembly (S1010);
attaching the lower insulator to the lower portion of the electrode assembly (S1020);
inserting the electrode assembly with the attached lower insulator into an opening of a battery case (S1030);
attaching the upper insulator to the top surface of the electrode assembly (S1040); and
sealing the opening of the battery case with a cap plate (S1050).
